# EUROPEAN PATENT APPLICATION

(11) **EP 2 853 661 A1**
(43) Date of publication of application: **01.04.2015**
(21) Application number: 13186121.3
(22) Date of filing: 26.09.2013
(51) Int. Cl.: E05B 37/08, B62K 19/46, E05B 71/00, B60C 23/10, B62K 19/42, F04B 33/00, B62H 5/00

(54) **Lock for use in a bicycle**

(71) Applicant: ROYAL COLLEGE OF ART, London SW7 2EU (GB); Millar, Damon, London SW7 2EU (GB)
(72) Inventor: Millar, Damon, London, SW7 2EU (GB)
(74) Representative: Coles, Andrea Birgit

(57) **Abstract**

The present invention provides a cylindrical lock that is capable of being changed between a locked state and an unlocked state. The lock comprises:
a hollow cylindrical collar (2) that has an axis (100) and bears a plurality of inwardly facing projections (5,5') that are arranged on its inner surface (64) and that are spaced apart from each other in the circumferential direction by spaces (65); and
a cylindrical lock body (3) that is movable axially within the collar when the lock is the unlocked state and that is held captive within the collar when the lock is in the locked state, which lock body has a central axially-extending shaft (10,15), a manually accessible turnable cap (4) attached at a near end of the shaft, a fixed disc (6) fixedly attached to the shaft, and at least one, e.g. two or more, annularly-shaped rotatable disc (7,8) that is rotatable around the shaft but is not fixedly attached to the shaft.

The outer edge of each of the fixed and annularly-shaped discs (6,7,8) carries a plurality of outwardly extending projections (11) that are separated by spaces (12); the discs are each rotatable when the lock is in the locked state.

When the lock is in the locked state, at least one of the collar projections (5) is positioned to engage with at least one of the disc projections (11), thereby holding the lock body captive within the collar and, when the lock is in the unlocked state, none of the collar projections (5) are positioned to engage with any of the disc projections (11), thereby allowing the lock body to be moved axially.

Each annularly-shaped rotatable disc (7,8) bears a tab (17,18) that extends inwardly towards the shaft (10,15) and wherein the shaft (10,15) bears at least one tab (16,17) on its outer surface, the arrangement being such that each annularly-shaped rotatable disc is rotatable around the shaft by engaging said shaft tab (16,17) with said disc tab (18,19) and turning the shaft and wherein the fixed disc (6) is rotatable directly by turning the shaft.

## Description

### Technical Field

The present invention relates to a cylindrical lock mechanism that can be used, for example to close the end of a bore, for example the bore in a hollow crank axle of a bicycle to secure item(s) therein. In particular, the item may be a bicycle pump that may be integrated inside the axle or be removable.

### Background of the Invention

Traditionally, bicycles have had a solid crankshaft between the pedals. In modern bicycles, the axle connecting the pedal cranks is hollow. Either a threaded end cap is employed to close off the hollow axle, or the axle is left open. The hollow axle creates a convenient cavity that may be used for storage.

Flat tyres are a frequent problem for cyclists. To repair a flat tyre temporarily, a tyre patch, adhesive and a pump to refill the tyre with air, are required. However, many cyclists do not carry a pump for repairing flat tyres, because it is inconvenient and the pump is easily lost or stolen.

A further concern for cyclists is security of their bicycle and individual bicycle parts when left unattended. A typical rotational combination lock, as often seen on safes, is unsuitable for securing a bicycle or items to a bicycle, due to size and cost. There is a need for a convenient, lightweight, economic lock to provide security for bicycle-related applications.

The present invention relates to both the aspect of providing a convenient bicycle pump, as well as a secure locking mechanism for securely storing items such as a pump on their bicycle and, optionally, for securing a bicycle.

### Prior Art

GB 2385030 discloses a pump housed inside the bicycle frame with connecting hoses running inside the frame to the front and rear wheels. The pump is driven by pedalling, which causes rotation of a cam inside the hollow crankshaft between the bicycle pedals. Similar disclosures of pumps can be found in US1163429, US5347913, US5890725, US601719, US5131671 and WO2004012983.

CN 2239369 discloses a bicycle wheel-hub pump, actuated by the turning of the wheel. It uses the wheel, not the crank, and it is operated by the turning of the wheel. It does not use a hollow axle - rather, it maintains a solid axle, and uses the inside of the wheel hub as the pump cylinder.

CN 2361538 and CN 101734327disclose a bicycle pump that uses tubing of the bicycle's frame as the cylinder of the pump and the seat post as the piston.

DE 102010007853 discloses a pump e.g. a piston pump, located in a hollow tube of a bicycle for inflating the tyre of a bicycle. The pump has a fastening unit fastened to the handlebar bracket of a bicycle

Combination locks are known from WO2012176068, US 2010319419, US 2008196460, US 7458239, US 5899099, FR 2612232, ES 8401174, US 4302955, US 3999408, US 3621683, GB 1499794 and US 226069.

### Summary of the Invention

The present invention is defined in the accompanying claims and broadly described in the following sections.

Broadly speaking, the invention relates in one aspect to a cylindrical lock that can be used in a number of applications, e.g. to form a lockable cylindrical closure to close off a cylindrical opening or as a lockable head of a security bolt or screw. The lock includes a cylindrical collar that bears, on its inner surface, at least one projection and at least one space provided between the ends of the at least one projection and together extending circumferentially around the inner surface of the collar. Thus, if more than one projection is provided, they together extend circumferentially around the inner surface of the collar and the space(s) are provided between the projection(s). In other words, each projection is spaced from its neighbouring projection by a space. If there is only a single projection, it extends circumferentially part of the way around the inner surface of the collar (optionally most of the way around the inner collar surface) and the space is provided between the two ends of the projection. The term "space" is used in the present specification to indicate the gap between adjacent ends of the at least one projection, e.g. between two adjacent projections or between the two ends of a single projection, and is intended to signify that each space is located at a lower level than the peaks of the adjacent projections. Thus, if one considered the inner surface of the collar to be generally cylindrical, the peaks of the projections could, in one embodiment, stand proud of the surface with the bases of the spaces being at the same level as the inner surface of the collar or, in an alternative embodiment, the bases of spaces could be at a lower level than the inner surface with the peaks of the projections being at the same level as the inner surface.

When the lock is used to close off an opening, the collar will be located in the mouth of the opening. The collar could be integral with the mouth, i.e. form part or all of the mouth of the opening, or may be non-integral, in which case it is secured inside the mouth by any suitable means, e.g. friction or a screw thread. The collar may be expandable to engage with the inner surface of a cylindrical opening that has a larger diameter than the collar.

In addition to the collar, the lock also includes a lock body that can be secured within the collar; the body comprising an accessible, turnable cap connected to a central shaft extending in an axial direction away from the cap and a fixed disc, fixedly attached to the central shaft, optionally to the end of the shaft furthest from the cap. The lock body also includes at least one further disc that is rotatable on the shaft, but not fixedly connected to the shaft. Each of the rotatable further discs can be rotated separately of the fixed disc. In one embodiment, the further disc(s) may be positioned between the fixed disc and the cap but the discs can be arranged in any order on the shaft. Each of the fixed and further discs carry a plurality of projections on their outer rim; the projections (or teeth) are separated by spaces located between the projections.

When the lock is present in the collar, the height of the projections on the collar and on the discs are such that they block removal of the lock body when two projections are aligned. Thus, in the locked state, at least one projection on at least one of the discs is aligned with a projection of the collar, which prevents the lock body being pulled out of the collar. However, when the discs are rotated to a state that none of the projections of the discs are aligned with any of the projections of the collar, i.e. all the projections are aligned with spaces, the lock is in an unlocked state and the lock body can be removed from the collar.

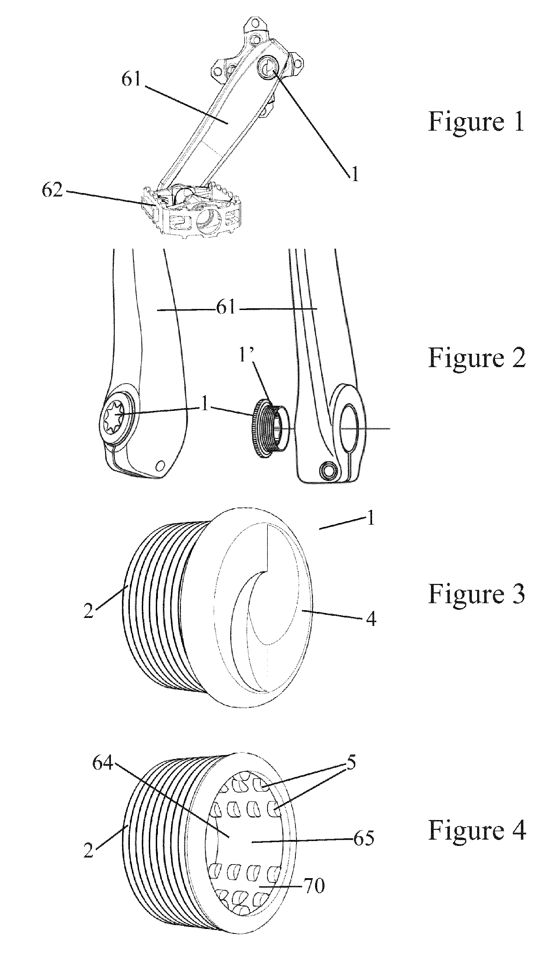

The projections in the collar may be arranged in in an array; within this array, the projections may be arranged in a plurality of rings, each ring being composed of projections that are spaced circumferentially around the inner surface of the collar. Each ring of projections is spaced apart from its neighbouring ring in the axial direction (i.e. in a direction of the axis of the collar) by a distance that will allow a disc to rotate between adjacent rings. Within the array, the projections may be arranged to form a number of rows, which may extend axially within the collar, although they may also extend helically; each row of projections is made up of one projection from each ring. Such an arrangement will become clearer with the subsequent description of Figure 4 of the accompanying drawings.

The lock body discs can be individually rotated so that, in at least one orientation of the discs, all the projections in the perimeters of all the discs are aligned with spaces between the rows of projections in the collar. In such an orientation, the lock is in an unlocked state and lock body can be slid axially out of the collar. This unlocked state can be seen in another way, namely, the lock body discs can be individually rotated so that, in at least one orientation of the discs, all the projections in the collar are aligned with spaces in the perimeter of the discs.

The lock includes a mechanism for rotating each of the discs separately from the other discs to bring it into the above orientation. The fixed disc may be rotated merely by turning the cap since the fixed disc is secured to the shaft and the shaft is secured to the cap. A number of mechanisms can be used for turning the further discs; in one embodiment, the shaft has an outwardly extending tab. The further discs, which are annular in shape and have a central cavity, may each have a tab that extends inwardly into the cavity. When the shaft is rotated, the path of the shaft tab coincides with the disc tab and therefore, by rotating the shaft in one direction, e.g. clockwise, the shaft tab can be brought into contact with the disc tab and further movement of the shaft in the same direction will cause the further disc to be turned clockwise. A second further disc can be turned by a similar arrangement of engaging tabs when the axle is rotated in the other direction, e.g. anticlockwise. The tabs can be present in a staggered arrangement around the axle when more than one tab is present.

The invention further relates to the use of the lock to close off tubing in a bicycle, e.g. the hollow crank axle of a bicycle.

Further aspects of the invention relate to a removable pump or an integrated pump housed in the hollow crank axle of a bicycle. These aspects of the invention may also comprise the lockable axle end cap of the invention.

A second embodiment of the invention relates to an integrated pump housed in the bore of the hollow crank axle of a bicycle, which may be secured within the bore by a lock as described above, when the pump is not in use. The inner surface of the bore may form the cylinder of the pump, while a piston is provided that is movable within the bore to enable air to be pumped by reciprocating the piston within the axle bore cylinder. The piston of the integrated pump may comprise a rod, which may carry, at a first end of the rod, the lock body of the lock described above, and, at a second end of the rod, a piston, e.g. a cup valve seal. A conduit is also provided to transfer the air generated by the pump to a bicycle tyre via its valve, said conduit comprising a valve connector at the end distant from the pump to supply compressed air to the bicycle tyre. The compression of gas is preferably achieved by pulling the pump rod, rather than pushing it but the pump can be adapted to provide that compression of gas is achieved by pushing the rod.

### Brief Description of the Figures

The present invention will now be described, by way of example only, by reference to the accompanying drawings in which:
Figure 1 shows a bicycle pedal and the location of the lockable axle end cap of the present invention.
Figure 2 shows a known standard Shimano® axle end cap that fixes the pedal crank to the hollow crankshaft.
Figure 3 shows the threaded collar and end cap of the lock of the present application.
Figure 4 shows a pattern of projections on the inner surface of the threaded collar of
Figure 3.

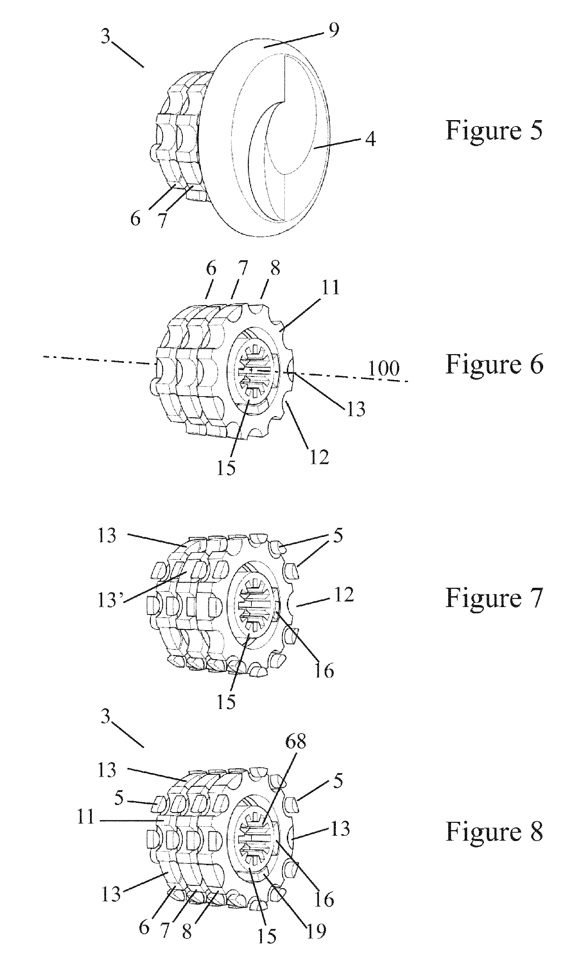

Figure 5 shows a lock plug, including the cap and rotatable annular discs bearing projections.
Figure 6 shows the rotatable annular discs bearing projections.
Figure 7 shows the lock plug in a state in which it is secured inside the collar (for the sake of illustration, only the projections of the collar are shown).
Figure 8 shows the projections of the annular discs aligned between the projections of the collar, in an 'unlocked' position.

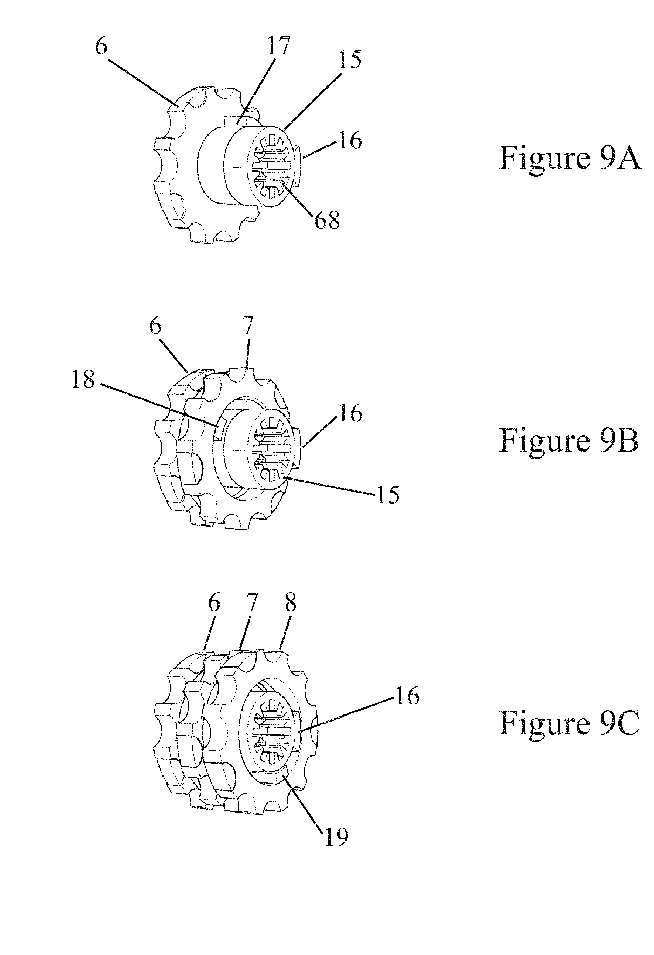

Figure 9A shows the fixed annular disc, the axle which connects the disc to the cap, and two outward tabs on the axle.
Figures 9B and 9C show the addition of intervening discs and engagement by the tabs on the axle.

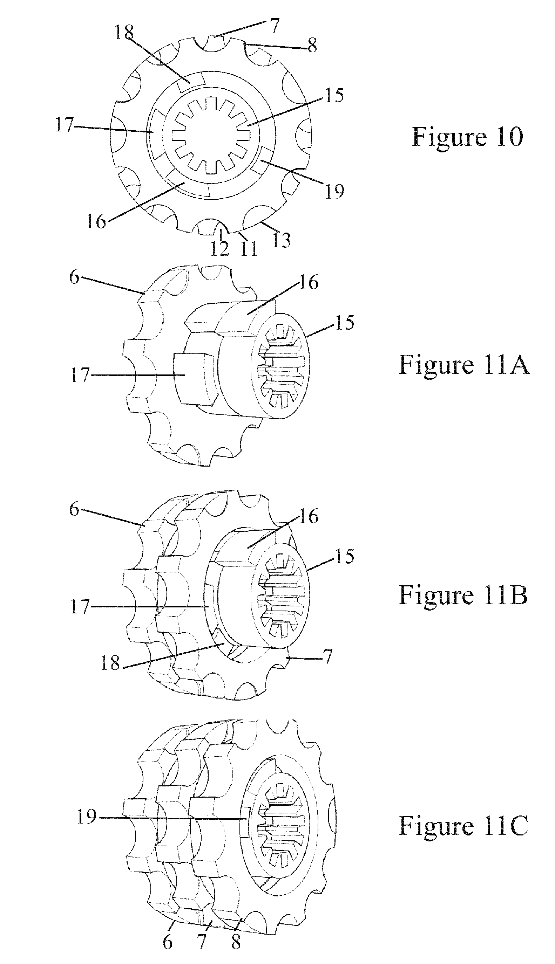

Figure 10 shows a cross section of the axle, tabs, and the ring shaped discs.
Figure 11A shows the fixed disc and the central axle bearing outwardly facing tabs.
Figure 11B shows the central axle bearing outwardly facing tabs, the fixed disc and the first rotatable disc bearing an inwardly facing tab.
Figure 11C shows the central axle, the fixed disc and two rotatable discs.

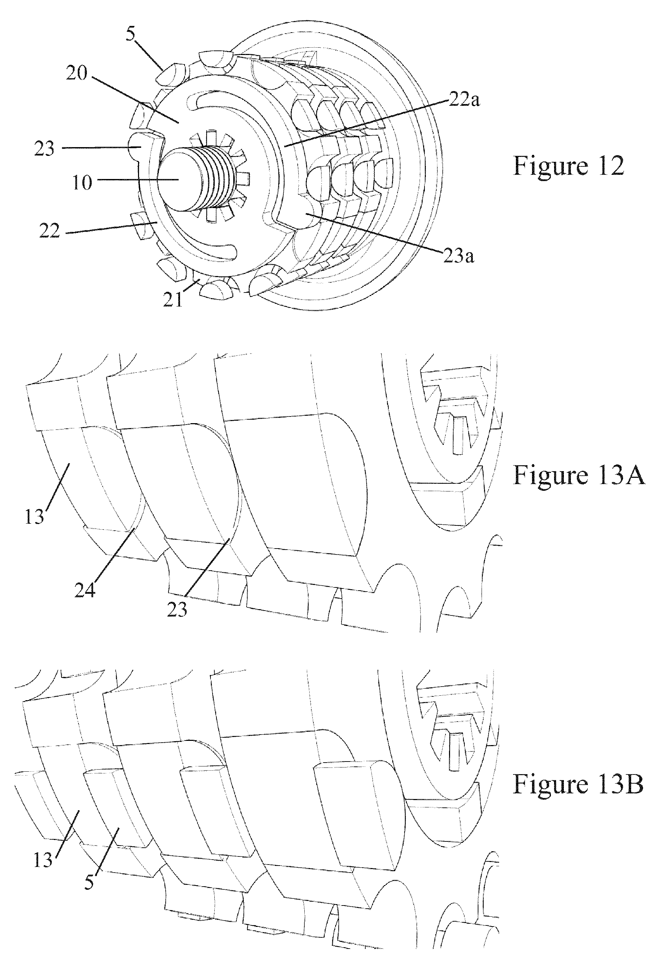

Figure 12 shows the constructed lock plug, the teeth of the collar (collar not shown) and the detent means "clickwheel".
Figure 13A shows the non cut-out portions of the discs bearing indented sections with position corresponding to the cut-out portions on other parts of the disc to different depths.
Figure 13B additionally shows the projections of the collar between the discs (collar not shown).

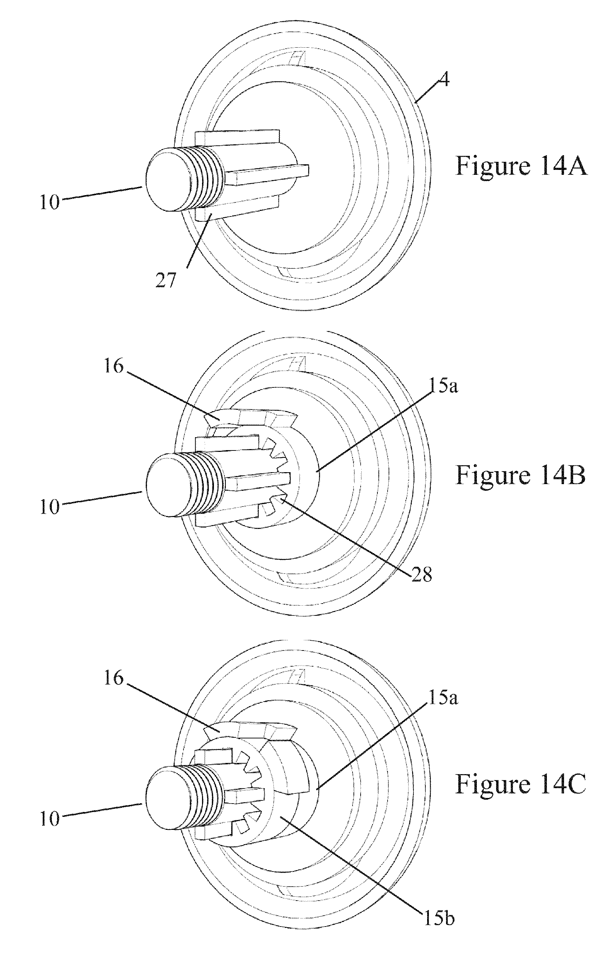

Figures 14A-14F show the construction of the lock plug.

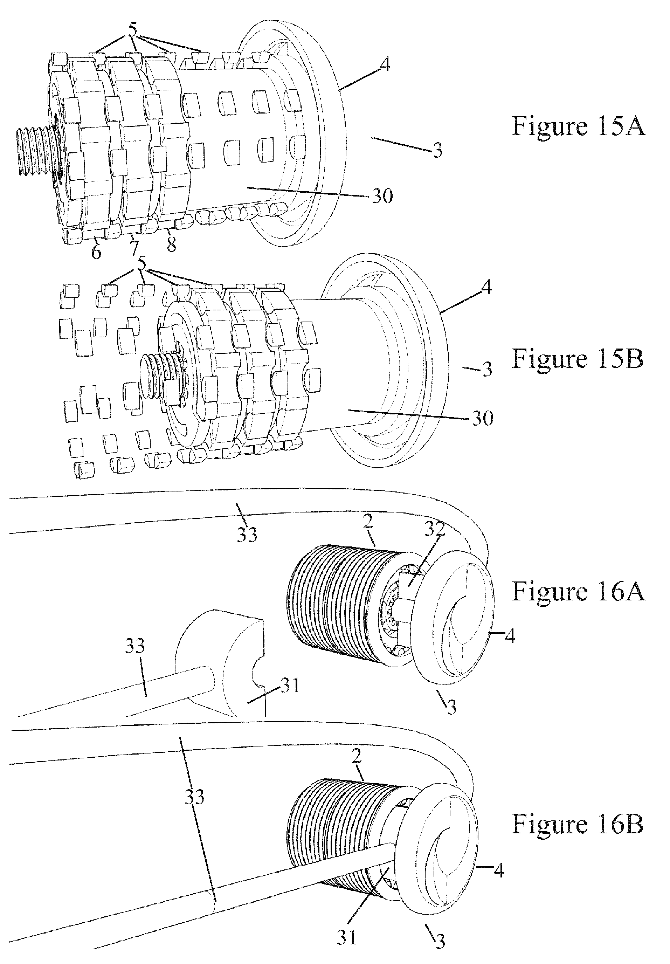

Figures 15A and 15B show the embodiment of the lock plug that can be locked in position partially pulled out from the collar.
Figure 16A and 16B show the partially pulled out lock plug and cable lock.

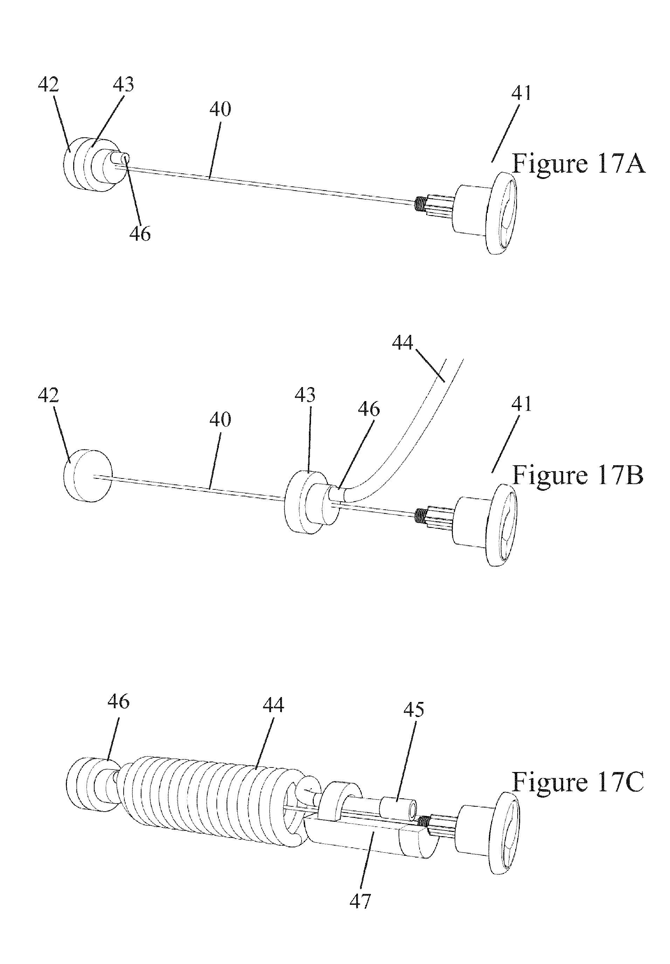

Figure 17A, 17B and 17C show the internal components of the integrated pump.

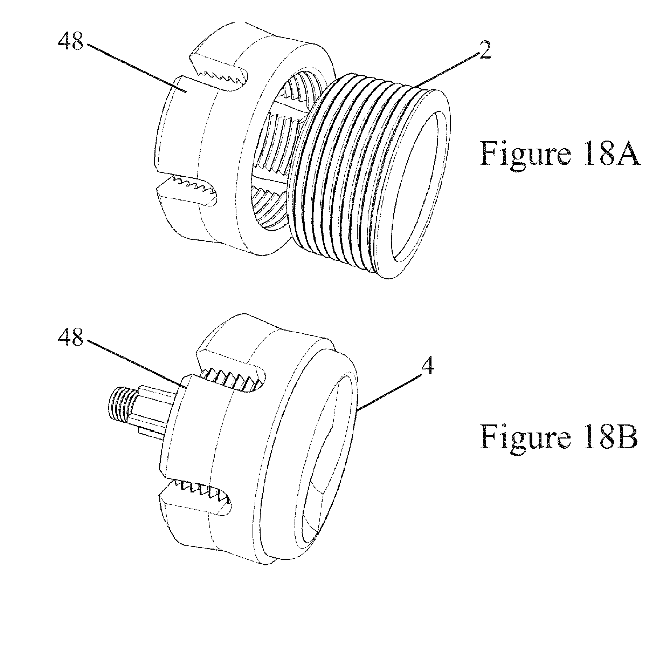

Figure 18A shows an expander adapter 48 that allows the threaded collar 2 to be used in larger unthreaded hollow crankshafts.
Figure 18B shows the collar and cap 4 fitted to the expander 48.

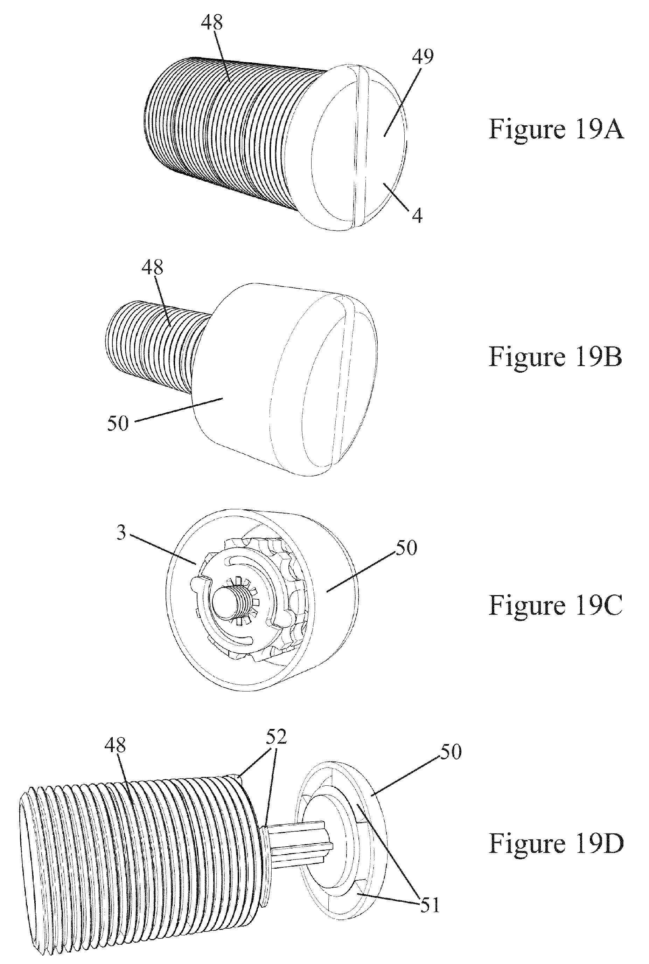

Figure 19A shows a security bolt, with the cap 4 shaped as a screw head 49 and the lock mechanism housed inside the threaded bolt shaft.
Figure 19B shows a security bolt with the locking mechanism outside the threaded bolt.
Figure 19C shows how an extended cap 4 protects the lock mechanism.
Figure 19D shows a spline mechanism for turning the bolt to fasten it, by engaging splines in the cap 51 against splines in the bolt body 52.

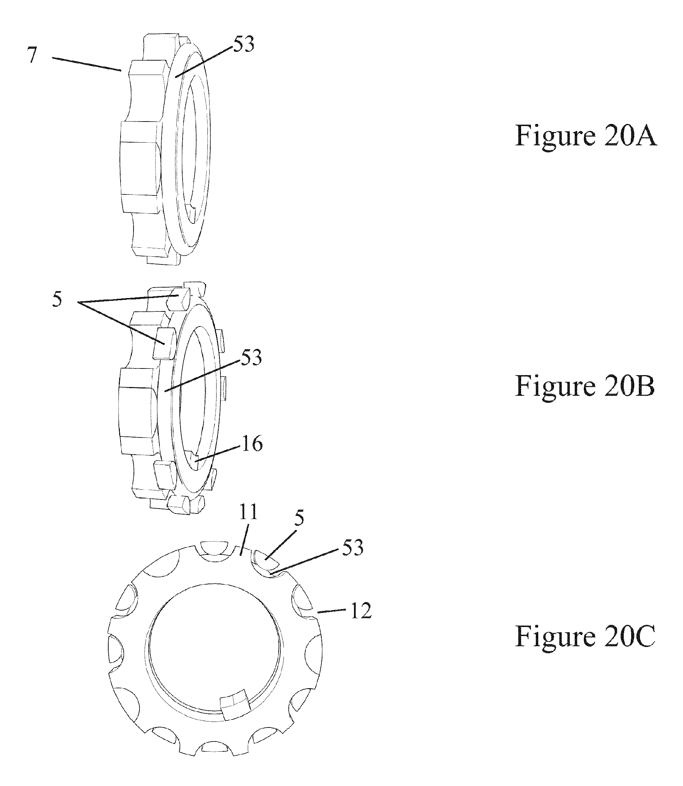

Figure 20A shows addition of a rubber O ring to the freely rotating discs.
Figure 20B shows how the O-ring sits between the collar's projections and the free discs.
Figure 20C shows how the O-ring protrudes into the gap between the teeth, causing friction with the projections.

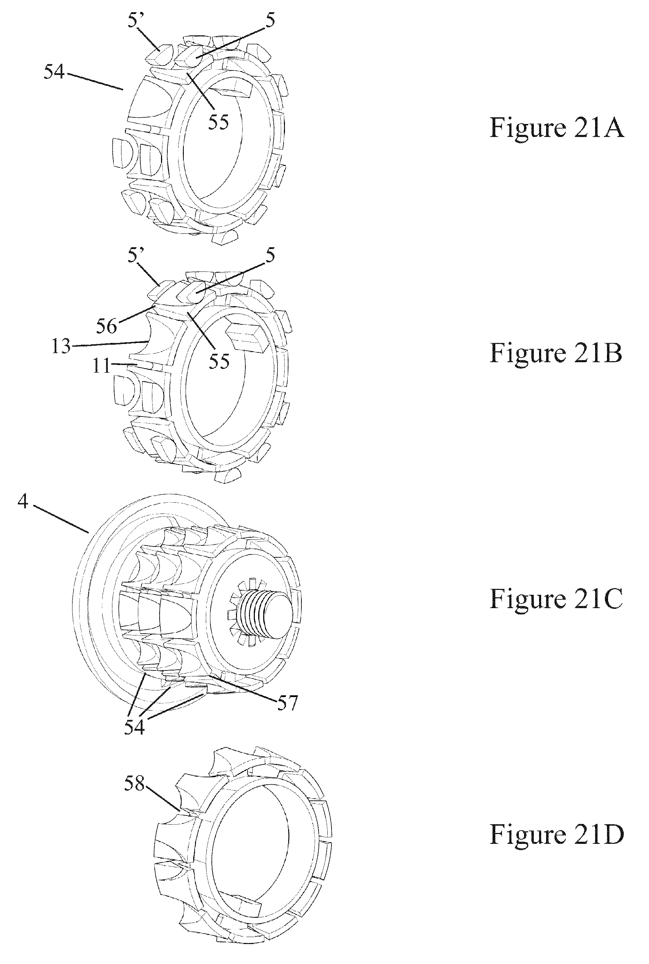

Figure 21A shows a chamfered disc 54, with longer, flexible teeth with chamfered ends 55 that contact the projections 5 retaining the adjacent disc.
Figure 21B shows how the thick side of the disc 56 prevents removal past the projections 5, while the chamfered side 55 uses the longer teeth on the adjacent projections to provide a detent.
Figure 21C shows how the chamfer biases all the free discs 54 towards the cap 4, eliminating slop.
Figure 21D shows a variation of the chamfered disc that contains a split 58 between the projections.

### Detailed Description of the Invention

Figure 1 shows a crankshaft 61 and pedal 62 of a bicycle; a hollow crankshaft axle (not visible) passes through the bicycle frame and connects the crankshaft 61 with a matching crankshaft (not shown) on the other side of the bicycle frame; this arrangement allows the crankshafts to be rotated by the cyclist pressing on the pedals. The hollow crankshaft axle has a bore (not visible) and a lockable cap 1 of the present invention closes the open end of this bore. Figure 2 shows a non-locking axle end cap as known in the art, bearing a screw-treaded threaded shank 1'.

Figure 3 shows the lock of the present invention in the form of the lockable end cap 1, which includes a collar 2 and a lock body (also referred to as a lock plug) having a cap 4 (only the cap is visible in Figure 3). The collar 2 of the lockable end cap is sized to fit into the open end of a cylindrical hollow axle, as shown in Figure 1, in exactly the same way as the prior art non-locking axle end cap 1' of Figure 2. Depending on the open end in the crankshaft axle, the outer surface of the collar may be threaded or smooth with an expandable jacket (the jacket is described in more detail below with reference to Figure 18). The collar is cylindrical. The threaded or non-threaded collar is secured into a cylindrical opening and remains secured to the cylindrical opening when the lock plug is removed, as explained later. In the aspect where the lockable cap is used in the hollow crank axle, the collar remains secured to the crank axle when the lock plug is removed.

The most common bicycle crank axle is sized to fit a Shimano® end cap. The lockable end cap of the present invention may be sized to replace the Shimano® end cap 1'. In a preferred embodiment, the outer surface of the collar 1 is threaded.

The external diameter of the collar is between 15-30mm, for example 18-28mm, e.g. 19-25mm, such as about 20mm. If the hollow crankshaft is a non-Shimano® crankshaft, the standard size of the external diameter of the axle is the BB30 standard (i.e. 30mm). The BB30 standard has an axle diameter larger than the Shimano® diameter and does not usually contain a threaded portion inside the axle, e.g. at the opening. The hollow axle of BB30 cranks is usually left open, without a plug. The internal diameter of a BB30 crank can between 22-29mm, for example, 24-28mm, e.g. 25-28mm, such as 25-27mm, Larger or smaller sizes may be used for different applications, e.g. the security bolts mentioned below.

The lock of the present invention may further comprise an expandable adapter 48 (see Figure 18A) around the collar to allow the lockable end cap 1 to fit into an open end of a hollow axle that has a greater diameter than the standard axle. The threaded collar 2 of the lockable end cap is screwed into the adapter 48, causing the adapter to expand and lock the collar 2 into place against the inside wall of the larger axle. Once the adapter 48 and the collar are in place, the lock operates in the same manner as the version without the expandable adapter. Figure 18B shows the collar 2 fitted to the expander 48, demonstrating how inserting the collar expands the expander, making it impossible to remove from the axle.

The external diameter range of the expander is, between 22-29mm, for example, 24-28mm, example 25-28mm, such as 25-27mm. Both the expander 48 and the collar 2 remain secured to the axle when the lock plug is removed.

Figure 4 shows the inner bore 64 of the collar 2 when the end cap 4 has been removed; as can be seen, the wall of the bore carries a pattern or array of tooth protrusions (also called projections) 5 arranged in four rings extending around the circumference of inner collar surface and also in a number of axial rows, which are equally spaced around the collar circumference except for one row 65 which is free of projections. Spaces 70 are provided between the rows.

The lock 1 includes a lock plug or body 3 (see Figures 5 and 6) that can be engaged within the collar to close off the end of a bore; the lock plug 3 comprises at least two discs; in the plug lock shown, there are three discs 6, 7, 8 - disc 8 is not visible in Figure 5. The cap 4 of the lock plug preferably has a valence 9, which conceals the collar 2 and its thread and/or the expandable collar 48 of the cap. The disc 6 furthest from the cap end is referred to herein as "the first disc" 6, and is rigidly connected to a central hub 15, which is in turn connected to the cap 4, as described below. This fixed disc can, in other embodiments, be located in the position of either of the other discs 7 and 8. The first disc 6 and the hub 15 can be turned by the cap 4 around an axis shown by broken line 100. Disc 6 therefore rotates with the hub 15 and the cap 4.

The discs 7,8 are located between the first disc 6 and the cap 4 (see Figure 5), and are in the form of annular rings. Preferably, one or two, annular discs are provided. Each annular disc is independently rotatable on the shaft, that is, each of the annular discs may be turned independently of the other discs.

Each of the discs 6,7,8 of the lock plug 3 has cut-out sections 12, thereby forming teeth 11 lying between adjacent cut-out sections (Figure 6). When the plug 3 has been inserted into the collar 2, the teeth 11 are rotatable between adjacent rings of the inwardly facing projections 5 of the collar. The cut-outs 12 are spaced at regular intervals around the discs, but not all possible cut-outs are made, as shown by the reference 13, such that the spacing of the teeth is not completely regular around the edge of the disc. The width of the teeth 12 is such that they can slide axially within the space 70 between the projections 5 of the collar (see Figure 4), when properly aligned. The width of the non-cut-out section 13 and the teeth 12 on either side of it is such that they can slide axially within the wide space 65 between the projections 5 of the collar, when properly aligned. Of course, the non-cut-out section 13 and the teeth 12 on either side of it can be formed as a single entity such that no difference can be seen between the non-cut-out section 13 and the adjacent teeth 12. The cut-outs 12 are such that they can slide axially over projections 5, when properly aligned.

Figures 7 and 8 illustrate the situation in which the plug 3 has been inserted into the collar 2 but for the sake of clarity, only the projections 5 (and not the rest of the collar) are shown. The discs 6,7,8 can be rotated so that they brought into register with the projections 5 of the collar.

The projections 5 of the collar may be a semi-circular shape. The cut-outs 12 on the outer edge of the discs may also be of a semi-circular shape, matching up oppositely with the semi-circular collar. However, other shapes, such as square, rectangular, triangular, and so forth are also envisaged.

When the lock plug 3 is within the bore of the collar, and when at least one projection 5 on the collar 4 is adjacent to a non-cut-out portion 13 of at least one of the discs 6,7,8, the lock plug 3 is secured inside the collar 5, for example when non-cut-out portion 13' is adjacent to a projection 5, discs 6,7,8 cannot get past the projections on the collar and the lock plug 3 is secured inside the collar 2 and cannot be removed. When the pattern of projections 5 on the collar 2 are each aligned with a cut-out sections 12 of the rings 6,7,8 (and each of the annular discs is aligned, such that the teeth 11 of the discs lie between projections 5 of the collar 2, (as shown in Figure 8), the lock plug can be removed from the collar. In this arrangement, the non-cut-out sections are aligned with the space 65 shown in Figure 4.

The sizes of the collar projections 5, the disc cut-out 12 and the discs 7,8,9 will vary, depending on the application of the lock.

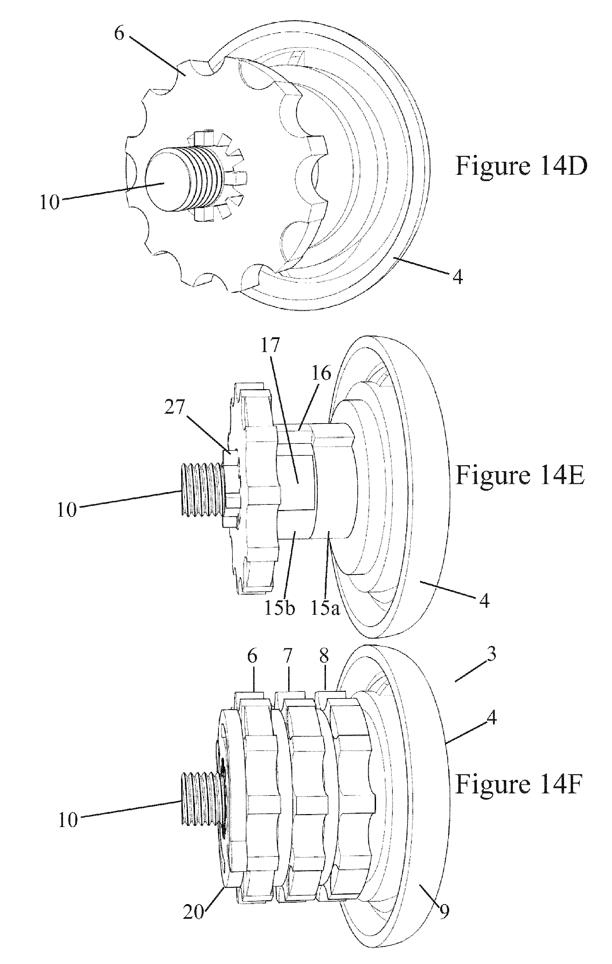

As shown in Figures 9A-C, the discs 6,7,8 are arranged around an hub 15 that can be turned about axis 100 (see Figure 6). The hub 15 may be, in turn, connected to a shaft part 10 (see Figure 14) that is integral with the cap 4. This shaft part 10 may optionally have splines 27 and the inner surface of the hub 15 may also be provided with splines 68 that interact with the splines 27 on the central shaft 10 so that, by turning the cap 4, the hub 15 can be caused to rotates also. As will be clear, the splines 27 of the central shaft part 10 can be inserted between the splines of the hub 15 in a number of different orientations. This is important since, as explained below, the cap 4 can act as a "codewheel", that is to say, it allows a user to open the lock by setting the cap in a combination of various positions known to an authorised user, in the same way as a combination lock. The ability to insert the splines of the hub 15 onto the splines 27 of the shaft part 10 in various orientations allows the combination used to open the lock to be altered. Alternatively, the hub 15 could be integral with the shaft part 10 and cap 4, in which case it is not possible to change the relative orientations of the cap 4 and the hub 15 and its associated tabs and discs.

As explained above, the annular discs 7, 8 are not fixed to the hub 15. The hub 15 bears at least one tab 16,17 on its outer surface, the number of tabs being at least equal to the number of annular discs. When more than one tab is present, the positions of the tabs may be staggered around the splined hub 15. Each of the annular discs 7,8 includes an inwardly-facing protruding tab 18,19, which is able to engage with tabs 16,17.

The following description relates to an embodiment having one fixed disc 6 and two independently rotatable, annular discs 7,8. This embodiment should not be construed as limiting on the scope of the invention, as either one fixed disc and one independently rotatable annular disc, or one fixed disc and more than two, e.g. three, independently rotatable annular discs may alternatively be present. The following description is merely illustrative.

Figure 9A shows the fixed disc 6 and the hub 15, which connects the disc 6 to the cap 4 (not shown in Figure 9, but see Figure 14D). The hub 15 bears two outward tabs 16,17 (see Figures 9A and 11A), each having flat side faces and a convex circular-section upper face.

Figure 9B shows the addition of annular disc 7 on the hub 15. The disc 7 is not directly connected to the hub 15 but, as stated above, the disc bears an inwardly protruding tab 18, the inner surface of which is concave and has a radius fractionally larger than that of the hub 15; tab 18 rests on the hub 15. Likewise, as explained above, the outer surface of the hub tab 17, which is convex and has a radius equal to the radius of the inner surface of the disc 7, rests on the inner surface of the annular disc 7. In addition, the teeth 11 of the disc 7 touch the inside wall of the collar 2 and these three factors locate the disc 7 centrally within the collar 2 when the lock plug 3 is inserted into the collar 2.

The side of the inwardly protruding tab 18 of the ring 7 can be engaged by the outwardly protruding tab 17 of the hub 15, which allows the disc 7 to be rotated by rotating the hub 15.

Figure 9C shows the addition of a further independently rotatable annular disc 8. It also bears an inwardly protruding tab 19 so that the disc 8 is supported on the tab 19 and the tab 16 of the hub 15 in the same way as discussed for the disc 7. Again, the side of the inwardly protruding tab 19 can be engaged by the side of the second outwardly protruding tab 16 of the hub 15, thereby enabling rotation of the disc 8 by turning the hub 15.

Figure 10 shows a cross section of the hub 15 with its outwardly protruding tabs 16, 17 and the annular discs 7, 8 with their inwardly protruding tabs 18, 19. It can be seen that the annular discs 7, 8 can be rotated by the hub 15 plus, in the case of annular discs 7 and 8, via tabs 16, 17, 18 and 19.

The outwardly protruding tabs 16, 17 of the hub 15 have different lengths in the axial direction (i.e. in a direction parallel to the axis 100), as shown in Figure 11A. Outwardly protruding tab 16 extends in the axial direction by a distance corresponding to the thickness of both the discs 7,8. The other outwardly protruding tab 17 of the hub 15 extends in the axial direction by a distance corresponding to the thickness disc 7 (Figure 11B) only. Thus, if the hub 15 is rotated in a clockwise direction, the outward tab 16 engages the inwards facing tabs 18,19 on both of the discs 7,8. If the hub is rotated in an anti-clockwise direction see Figures 10, 11B and 11C), the second outward tab 17 engages the inwards facing tab 18 of the second (middle) disc 7 only. The fixed disc 6 is secured to the hub 15, and so rotates with the hub 15 and such rotation does not alter the position of either independently rotatable discs 7, 8 unless the tabs 16,17 are engaged with tables 18,19.

Therefore it is possible to change the position of the discs to a desired "open" position in which the cut-outs 12 of the discs are all aligned with the projections 5 of the sleeve. In the case of disc 8, this is done by turning the hub 15 in the clockwise direction, which causes the tab 16 of the hub to engage the tab 19 of the disc 8 and further movement will cause the disc 8 to be moved clockwise to its "open" position. It is possible that, during this clockwise axle movement, the axle tab 16 will also engage the tab 18 of the disc 7 and if this happens, the disc 7 will also be moved in the clockwise direction, but not necessarily to an "open position" for disc 7. The disc 7 can, however, be moved to its open position by the action of hub tab 17 on disc 7 tab 18 when rotating the hub 15 in the anticlockwise direction without altering the position of the disc 8. Lastly, with discs 7 and 8 in their "open" positions; the hub 15 can be turned again in the clockwise direction to bring the fixed disc 6 into its "open" position. With all three discs 6,7,8 in their open positions, the projections 5 on the inside of the collar 2 do not obstruct the removal of the plug 3. In other words all the non-cut-out sections 13 are aligned with the projection-free row 64 in the inside surface of the collar 2 and so the lock plug 3 can be removed from the collar 2. It should be noted that there may be more than one projection-free row 64 on the collar and the number of such rows will generally correspond to the number of non-cut-out sections 13 on the discs 6, 7,8.

The arrangement of the outwardly protruding tabs 16, 17 and the locations of the projections 5, the cut-out sections 12 and the non-cut-out sections determines the unlocking position for the lock plug 3 and the number of possible unlocking positions that exist for a particular lock plug.

In the embodiment described:
- The height of the axle tabs 16,17 is between 0.8-1.5 mm, for example 0.9-1.3 mm, e.g. 1-1.2 mm, such as about 1mm.
- The height of the teeth 11 is between 0.8-1.5 mm, for example 0.9-1. 3 mm, e.g., 1-1.2 mm such as about 1 mm.
- The outer diameter of the hub 15 is between 5-10 mm, for example 6-9 mm, e.g. 7-8 mm, such as about 7. 5mm.
- The inner diameter of the discs 6,7,8 is between 7-12 mm, for example, 9-11 mm, such as about 10mm.

For the removal of the lock plug 3, the projections 5 of the collar 2 and the cut-out sections 12 of the annular discs 6,7,8 must be accurately aligned. The end cap 4 may be provided with index markings, for example numbers, spaced circumferentially around its outer face or rim to assist in this alignment by an authorised user.

Although four rings of projections 5 are shown in Figure 4, in fact only three rings are needed, one to lie in front of each ring 6, 7, 8 (i.e. there is a row of projections 5 lying between each disc 6, 7, 8 and the end cap 4). The function of the fourth (most inwardly) row will now be described.

For greater security, a system may be provided to prevent discovery of the unlocking 'code' positions of the discs 6,7,8 by means of tactile feedback, e.g. when the inwardly facing tabs 18,19 of the discs contact the outwardly facing axle tabs 16,17. To this end, the inclusion of a "clickwheel" 20 (Figure 12) provides a strong tactile and/or audible 'click' thereby preventing the unlocking code from being discoverable by tactile feedback. It also indexes the positions of the discs 6, 7, 8 and assists an authorised user in dark conditions in properly entering the combination required to unlock the lock.

The clickwheel 20 is provided in the lock plug 3 as an indexing mechanism strongly locating the annular discs 6,7,8 in discrete alignments. It has a pair of resilient arms 22,22a on opposing sides of the wheel 20 and each includes a head 23, 23a at the ends of the arms; the heads 23,23a can have a semi-circular outer surface, as shown. The clickwheel may be located next to the fixed disc 6 on the far side from the cap end 4, as shown (although other locations are possible) and sized to fit within the solid diameter of the fixed disc 6, not including the teeth projections 11 of the fixed disc, with the exception of the projections at the ends of the arms. When the hub 15 is rotated, the heads 23,23a are brought successively into the space between the fourth (innermost) ring of projections 5 to allow the wheels 6,7,8 to adopt only a limited number of positions. The clickwheel 20 also provides tactile feedback of the position (e.g. "three clicks clockwise") and causes the lock to move quickly and noisily through the transition zones where the tabs 16, 17, 18, 19 are brought into engagement, thereby making the lock difficult to pick by sound or touch. It also allows a user, who knows the unlocking code of the lock, ease of use in dark conditions. An alternative mechanism for providing tactile feedback is described in connection with Figures 21A-D.

With the arrangement discussed so far, it may be possible to discover the unlocking position by ascertaining which of the discs 6, 7, 8 is preventing the withdrawal of the lock plug 3, by determining how much free play there is in the plug's axial movement. For example, if the fixed disc 6 is preventing the withdrawal of the plug, the free play when a user pulls on the cap in the axial direction will be equal to the distance between the non cut-out portion(s) 13 of the fixed disc and the collar projections 5. This is because the fixed disc 6 will not slide axially on the hub 15. On the other hand, there is some play in the axial positions of the annular discs 7, 8 along the hub 15. Therefore, if it is the disc adjacent to the cap 4 (i.e. disc 8) that is preventing the withdrawal of the lock plug 3, the axial movement of the cap 4 will be equal to the distance between the non-cut-out portion(s) 13 of the disc 8 plus the play in the axial positions of discs 7 and 8.

In order to prevent the amount of play in the axial direction allowing a non-authorised user to discover which of the discs 6, 7, 8 is obstructing the removal of the lock plug 3, the non cut-put portions 13 of the discs 6,7,8 have indentations, as shown in Figure 13A. These indentations - a slight deepening of the non cut-out portion relative to the surface of the disc - will be deepest for a fixed disc 6 (where the other play in the lock plug is smallest) and shallowest for disc 8 (where the other play in the lock plug is greatest) so that the overall play in the axial direction of the lock plug 3 is the same irrespective of which of discs 6, 7, 8 prevent the removal of the lock plug 3 from the collar 2. For example, for the fixed disc 6, the indentation on the side of the disc facing the cap is 0.18-0.22 mm, for example, 0.2mm while, for the middle disc 7, the indentation on the side of the disc facing the cap could be 0.08-0.12 mm, for example 0.1 mm; for the outer disc 8, there could be no indentation of the non-cut-out region 13.

In one embodiment of the invention, the hub 15, the tabs 16, 17 and the fixed disc 6, are provided as a single piece and the unlocking code is set by the manufacture and can only be changed by the user to a limited extent as a result of the different orientations of the hub 15 relative to the cap 4 resulting from the use of spines 68 described above. In another embodiment, as shown in Figure 14 A to C, the lock plug 3 may have a cap 4 and a central shaft 10 provided with splines 27 (Figure 14A). The hub 15, which sets the code for opening the lock, is divided into separate parts 15a, 15b, each of which is slid onto the central shaft 10 (Figure 14B and 14C). The inner surface of each hub part 15a,15b has splined teeth 28, allowing it to fit onto the splined central shaft 10 in various degrees of rotation. The first hub part 15a bears the outward tab 16 that engages with the inwards-facing tabs 18,19 of both freely rotatable discs 7,8. The second hub part 15b bears the outward-facing tab 17 that engages only with the middle disc 7 (Figure 14C). The fixed disc 6 is then placed onto the splined shaft 10, in the desired rotation (Figure 14D). Therefore, the cap 4, the shaft 10, the axle parts 15a, 15b and the fixed disc 6 are connected together on the splines 27 so that they all rotatable together. Figure 14E shows a side view of the fixed part of the lock plug.

Figure 14F shows a side view of the parts 4,10,15a and 15b of the lock plug 3, additionally comprising the first 7 and second 8 annular discs located between the fixed disc 6 and the cap 4, and the clickwheel 20 located on the splines 27 on the far side of the fixed disc 6. The end of the shaft 10 is threaded and the assembly shown in Figure 14 F is secured on the shaft by a nut (not shown) screwed on to the threaded section of the shaft.

The lock plug 3 fits inside the collar 2, and the collar fits under the valence 9 of the cap 4, so that none of the collar is visible or accessible to remove the collar from the crankshaft axle. Turning the plug cannot remove the collar from the crankshaft axle.

The unlocking procedure to withdraw the lock plug from the collar and axle is as follows:
1. the cap 4 of the lock plug 3 is rotated one full turn in a clockwise direction, until both of the inwardly-facing tabs 18, 19 of the freely-rotatable discs 7,8 are engaged on the outwardly facing axle tab 16. The full clockwise turn brings the inwardly-facing tabs 18, 19 of both discs to rest on the face of the outward-facing tab 16 of the hub 15. The cap 4 is continued to be turned in a clockwise direction until the projections 11, 13' around the outside of the disc closest to the cap (e.g. disc 8) are all aligned with the spaces 65,70 between the projections 5 on the inner surface of the collar 2. The user can identify this position by marks, for example numbering, on the outside of the cap 4. A specific number is brought into a specific position, for example the vertical position. The authorised user knows the number corresponding to this alignment position.
2. The cap 4 is then turned anti-clockwise, which causes the lock hub 15, including outwardly extending tabs 16, 17, to turn in an anti-clockwise direction, which means that the hub tab 16 is brought out of engagement with the side faces of the inwards facing tabs 18, 19 of the discs 7,8. Both annular rotatable discs 7,8 are now disengaged from the hub 15. The hub is turned anti-clockwise until the second outwardly protruding tab 17 of the hub 15 catches the side face of tab 18 of the second (middle) ring 7. Because the outwardly-facing tab 17 engages only the middle ring 7 and not the third ring 8, only the (second) middle ring is engaged by this movement of the hub and so the second ring 7 is turned in the anticlockwise direction while the (third) ring 8 remains static. The second ring 7 is turned until it is in the position where the projections 11, 13' around the outside of the second (middle) disc 7 are all aligned with the spaces 65,70 between the projections 5 on the inner surface of the collar 2. Again, the second ring 7 is brought into its aligned position by moving a mark or number on the outside of the cap 4 to a specific position. The authorised user knows the number corresponding to this alignment position.
3. With both rotatable rings 7, 8 now in correct alignment for removal of the lock plug 3, the fixed disc 6 can now be directly turned, clockwise, until the projections 11, 13' around the outside of the fixed disc 6 are also aligned with the spaces 65,70 between the projections 5 on the inner surface of the collar 2. The lock plug 3 is now in the unlocked position and can be withdrawn from the collar, giving access to the hollow cavity or hollow axle in which the lock is positioned.

It should be noted that the indexing mechanism (when used) will generally align the discs 6,7,8 so that their teeth 11 are in alignment with the spaces 70 between the teeth and so the positioning of the discs in these circumstances is to align the non-cut-out sections 13' with the projection-free row 65.

When the lock plug 3 has been re-inserted into the collar following the opening of the lock, it is simply necessary to rotate the cap 4 backwards or forwards to ensure that the lock is in a locked state.

In a further embodiment of the present invention, the lock plug 3 may be locked in an extended position with an additional space 30 (see Figure 15) provided between the cap 4 and the closest rotatable disc 8. As illustrated in Figures 15A and 15B, the collar 2 is provided with a number of additional circumferential rings of projections 5. The lock plug 3 can be secured inside the collar 2 at a range of depths: a) completely inserted (i.e. with no space 30 between the cap 4 and the collar 2), or b) protruding to a variety of depths, depending on the number and location of circumferential rings of projections 5 in the collar 2 and the space 30 required to be provided between the cap 4 and the closest disc 8.

One application of this embodiment (see Figure 16) is to enable a bicycle to be locked up by wrapping a lock cable 33 around a stationary object. For example, as shown in Figure 16A, the protruding part 30 of the lock plug 3 (see Figure 15B) could be provided in two parts 31, 32, one of which can be removed to allow the wrapping of the cable lock 33 around a stationary object (not shown). The two parts 31, 32 can then be united to form the protruding parts 30 of the lock plug 3. The lock plug 3 can then be inserted further into the collar 2, to lock the plug 3 and cable ends 31, 32 into place, but allowing the cable to extend out from between the lock plug and cap 4, as shown in Figure 16B. When the cable lock is not in use, the cable may be stowed completely within the hollow shaft of the crank, and the lock plug is secured in the fully closed (not partially protruding) position within the collar, as already described above.

The lockable cap 4 may be used to provide secure storage of one or more objects within the hollow axle shaft of a bicycle crank. For example, objects that may be securely stored inside the hollow axle include one or more of the following: a bicycle pump, bicycle tyre patches for repairing a bicycle tyre, a cable for locking the bicycle to a secure object, a CO₂ canister, an adapter to connect a pump, hose or canister to a bicycle tyre valve, a tool kit for bicycle repair, coins, keys, batteries, an SOS beacon, a spare bicycle light, etc.

Many cyclists carry a CO₂ canister instead of a pump, to inflate tyres more quickly. The canister can also be stored inside the hollow axle. A small bracket could be provided to allow easy and secure storage of the canister. Additionally, a valve adapter and repair kit could be stored as well.

In another application, the lockable cap may comprise a retractable light that protrudes from the crankshaft axle opening. The light may be operated, for example by a dynamo powered by the turning of the bicycle pedals. In one embodiment, the light has a red half and a white half and is gravitationally biased to keep the white half facing towards the front of the bicycle and the red half facing towards the rear of the bicycle while the pedals are being turned.

Constrained storage, such as an elastic sock, can be used for quiet and safe storage of objects such as coins and keys.

The lockable cap may be used for applications other than bicycles, such as bolt heads, security or anti-tamper bolts, locking pins, door locks, car steering wheel locks, child-safes, car cigarette lighters, etc.

### The Integrated Pump

A further aspect of the present invention is the provision of an integrated pump housed in the bore of the hollow crank axle of a bicycle. The lockable cap described above forms the removable end cap to close the axle bore, when the pump is not in use. Alternatively, a non-lockable cap can be used in place of the lockable cap. This cap may be threaded or non-threaded. The inner surface of the crank axle wall forms the outer wall (or cylinder) of the pump.

The internal components of the integrated pump are illustrated in Figures 17A, 17B and 17C. The integrated pump comprises: a rod 40 carrying a lockable cap 41 (such as lockable lock plug 3 described above) at a first end, and a piston 42 at a second end. A seal 43, which is provided between the piston 42 and the lockable cap 41, is movable along the rod 40 by means of an opening provided in the seal 43. The seal 43 includes an air outlet stub 46 to which a conduit 44, such as a hose, is attached to transfer the air generated by the pump to a bicycle tyre. The conduit 44 includes a valve connector 45 at the end distant from the pump that attaches to the bicycle tyre valve.

The integrated pump of Figures 17A to C is operated by removing the lock plug 41 from the crank axle bore, e.g. as described above with the lock plug 3.On pulling the lock plug 41 away from the opening in the crank axle bore (not shown), the rod 40 is pulled through the axle opening. The piston and seal 42,43 move towards the open axle end and the seal 43 engages with, and is retained by, the inside of the collar 2 (not shown in Figure 17 but see Figure 2), located at the open end of the axle, sealing the opening in an air-tight manner. The lock plug 41 is then pushed back, thereby pushing the rod 40 and the piston 42 back into the hollow axle. The seal 43 includes a valve such that air can flow past the seal 43 when the piston 42 is pushed into the bore, but does not allow air to flow past it when the piston is pulled out of the bore; suitably, the piston could be in the form of a cup valve, as is used in standard bicycle pumps. Repeated moving of the lock plug 41 towards and away from the axle opening causes the piston 42 to move backwards and forwards inside the axle bore acting as a cylinder, generating a flow of compressed air into the conduit, which is conducted to the bicycle tyre to allow inflation.

When the pump is no longer needed, the seal 43 can be manually pushed back into the hollow axle bore by the user. The conduit 44, may be self-coiling (see Figure 17C) and so coils itself prior to being pushed back into the hollow axle bore. The lock plug 41, and in particular the part 3 (Figure 5), is then slid back into the collar 2 at the axle opening and locked. The conduit, such as a hose, is stored inside the hollow axle, when the pump is not in use, as shown in Figure 17C. A repair kit 47 can additionally be stored inside the pump housing. The repair kit and hose will both be extracted from the crankshaft axle when the lock plug 41 and rod 40 are withdrawn from the hollow axle.

Combinations of any of the above variants are envisaged. For example, a pump could use a reinforced hose that is sturdy enough to also be used as a lock cable. A "push pump" version of the pump is possible. This version requires the user to press on the lock plug 41, instead of pulling it, to compress the air. The push pump differs from Figure 17B, in that element 43 acts as the piston instead of element 42 and element 43 is connected rigidly to the far end of the rod 40, i.e. at the end away from the lock plug 41. The element 42 would be either absent (in the case of an axle bore that has a blind sealed end) or immovably fixed to the end of the axle. Element 43 must also be able to allow air to bypass it when it is pulled towards the plug lock 41. Pushing the element 43 causes air to be ejected up the hose 44.

The disadvantage of a push pump is that the pushing action pushes the cranks 61, which may be resting on the ground if the bicycle is lying on its side, potentially damaging or scuffing the cranks. It also requires a thicker rod 40 to resist bending.

### Security Bolt Head

An alternative use for the locking mechanism is in connection with securing fasteners, e.g. bolts or screws, in a tamper-proof manner. For this aspect of the invention, the head of the fastener is detachable from the threaded portion, allowing it to rotate freely unless the correct combination has been entered (see below for a discussion of the mechanism). The fastener may only be tightened or loosened upon entry of the correct combination. Alternatively, the head may be removed on entering the correct combination to allow access to an arrangement that allows the fastener to be tightened or loosened.

In one embodiment of this aspect (Figure 19A), a security bolt has a threaded bolt shaft 48 and a cap 4 shaped as a screw head 49; a combination code lock mechanism (for example as described above) is housed inside the threaded bolt shaft 48 underneath the cap 49. The lock mechanism described above is ideally suited to security bolt products, because it is very simple, cheap to manufacture and is resistant to force - the bolt head 49 rotates freely atop the threaded shaft 48 unless the correct code has been entered, so rotational torque attacks are ineffective.

In another embodiment (Figure 19B), the locking mechanism is housed outside the threaded bolt 48. In this embodiment, the cap 50 may be extended, e.g. by means of a valence, to be flush with the locking surface, to protect the lock mechanism from tampering. Figure 19C shows the combination lock mechanism 3 inside the valance cap 50. The advantage of housing the lock mechanism external to the threaded shaft 48 is that it allows a comparatively larger lock mechanism, which may be necessary for very small bolts, where the lock cannot be miniaturised enough to fit within the bolt shaft. The disadvantage of housing the lock mechanism externally is that the lock protrudes from the surface being clamped. However, it is possible to overcome this disadvantage by counter-boring a second, larger hole, to allow the top of the cap 50 to sit flush with the workpiece surface.

If the bolt head / cap 49,50 is to retained on the fastener when the correct combination has been entered, there needs to be a method for transmitting the fastening / unfastening torque from the bolt head to the threaded shaft, once the combination has been entered. The nature of the combination code lock mechanism is that it allows axial movement once the code has been correctly entered. A system of splines can be used to transmit the tightening/loosening force from the bolt head / cap 49,50 (Figure 19D) to the shaft 48 that can be engaged by axial movement of the security bolt head. Thus the bolt head is not removed once the correct code has been entered: rather than removing the cap, the cap can be made to move axially toward the threaded shaft 48, so splines 51 in the bolt head / cap 49,50 engage with splines 52 in the bolt shaft allowing the transmission of the tightening/loosening force from the bolt head / cap 49,50 to the shaft 48.

In this case, it would be possible to input the combination using a screwdriver, then the cap / bolt head 49,50 click inward, and engage the splines 51 and 52 to allow the bolt to be turned directly with the screwdriver. In this implementation, the lock plug and the bolt head /cap 49,50 are never removed - and the latter simply moves between the engaged and disengaged positions.

An alternative implementation uses splines that are engaged by pulling the bolt head axially away from the thread 48 rather pressing it towards the thread, to engage the splines. The pull method has the advantage that no gap is left between the cap 50 and the surface when the bolt head is securely locked.

### Lock Variants

Several alternative variations of the locking mechanism are possible.

In one variation (Figure 20A), a resilient band, e.g. a rubber O-ring, 53 is attached to the perimeter of the freely rotating annular discs 7,8 (only disc 7 is shown) in the portion of the disk such that it is below the level of the teeth 11 and above the level of the bottom of the cut-outs 12 (Figure 20C). The band lies concentric with the ring of collar projections 5. The O-ring 53 sits on one side of the disc 7 inwardly of the collar projections 5 (Figure 20B) providing friction between the discs and the projections 5 that ensures that the independently rotatable annular discs 7,8 stay stationary unless moved by its tab 16 and prevents these discs from moving around or making rattling noise when the lock is used in rough conditions..

In another variation, the independently rotatable annular discs 7,8 may be modified and be in the form of disc 54 (Figure 21A) that is formed with a chamfered edge that is extended at 55 beyond the rest of the disc so that it contacts the ring of projections 5' that retain the adjacent disc (the ring of projections 5 that retain the illustrated disc 54 are also shown in Figure 21). As can be seen, the chamfered edges 55 provide scalloped cut outs 12 and the edges of the scallops form the teeth 11. The extended chamfer 55 flexes to provide a detent on each independently rotatable annular disc 54, so the disc no longer relies on friction to maintain its position unless moved by their tabs 16 - 19. The disc 54 still operates as before (Figure 21B): the thick side of the chamfered disc 56 prevents the disc being moved past the projections 5 associated with that disc. The new functionality is provided on the thinner side of the chamfer, where the extended projections 55 of the chamfered side provide a detent contacting the adjacent ring of projections 5. Further, the orientation of the disc chamfers may be arranged (Figure 21C) to bias all the independently rotatable discs 54 in one direction, towards the cap 4, eliminating mechanical free play. The elimination of free play reduces the tolerance needed for the discs to move between projections. To provide sufficient flexibility to act as a detent, the extended edge of the discs may be cut axially 57 at intervals. These cuts may be located between the projections 5, or in a preferred embodiment (Figure 21D) located below the projections 5' to create a smoother transition.

## Claims

1. A cylindrical lock that is capable of being changed between a locked state and an unlocked state, which lock comprises:
a hollow cylindrical collar (2) that has an axis (100) and bears at least one inwardly facing projection (5,5') and at least one space (65) that are together arranged circumferentially around the inner surface (64) of the collar ;
a cylindrical lock body (3) that is movable axially within the collar when the lock is the unlocked state and that is held captive within the collar when the lock is in the locked state, which lock body has a central axially-extending shaft (10,15), a manually accessible turnable cap (4) attached at a near end of the shaft, a fixed disc (6) fixedly attached to the shaft, and at least one, e.g. two or
more, annularly-shaped rotatable disc (7,8) that is rotatable around the shaft but is not fixedly attached to the shaft,
wherein the outer edge of each of said fixed and rotatable discs (6,7,8) carries at least one outwardly extending projection (11) and at least one space (12), which discs are each rotatable when the lock is in the locked state, which discs are each rotatable when the lock is in the locked state,
wherein, when the lock is in the locked state, said at least one collar projection (5) is positioned to engage with said at least one disc projection (11), thereby holding the lock body captive within the collar and, when the lock is in the unlocked state, none of the collar projections (5) are positioned to engage with any of the disc projections (11), thereby allowing the lock body to be moved axially, and
wherein each of the said at least one annularly-shaped rotatable disc (7,8) bears a tab (17,18) that extends inwardly towards the shaft (10,15) and wherein the shaft (10,15) bears at least one tab (16,17) on its outer surface, the arrangement being such that each annularly-shaped rotatable disc is rotatable around the shaft by engaging said shaft tab (16,17) with said disc tab (18,19) and turning the shaft and wherein the fixed disc (6) is rotatable directly by turning the shaft.

2. The cylindrical lock of claim 1, wherein said at least one rotatable disc (6,7) is positioned between the fixed disc (6) and the cap (4).

3. The cylindrical lock of any preceding claim, wherein the number of tabs (16,17) on the shaft is at least equal to the number of annularly-shaped rotatable discs (17,18), and wherein the shaft tabs (16,17) are present in a staggered arrangement around the shaft (10,15) when more than one shaft tab is present.

4. The cylindrical lock of any preceding claim, wherein said cylindrical collar (2) bears a thread on its outer surface.

5. The cylindrical lock of any preceding claim, for use in securely closing the hollow crank axle of a bicycle or for connecting the head and the shank of a tamper-proof security fastener, for example for use in securely storing an object within the hollow crank axle of a bicycle, e.g. a bicycle pump, bicycle tyre patches, a cable for locking the bicycle to a secure object, a CO₂ canister, an adaptor to connect a pump, hose or canister to a bicycle tyre valve, a tool kit for bicycle repair, coins, keys, batteries, an SOS beacon, bicycle lights.

6. The cylindrical lock of any preceding claim, wherein the collar comprises a plurality of projections (5) arranged in a plurality of circumferential rings, each ring being composed of at least one projection and at least one space that are together arranged circumferentially around the inner surface of the collar and wherein each ring is spaced apart from its neighbouring ring in the axial direction by a distance that will allow a disc (6,7,8) to rotate between adjacent rings and optionally wherein the projections (5) are arranged to form a number of rows, each row of projections being made up of one projection from each ring.

7. The cylindrical lock of any preceding claim,
wherein the hollow cylindrical collar (2) bears a plurality of inwardly facing projections (5,5') arranged circumferentially around its inner surface to form a circumferentially extending ring, which projections are spaced apart from each other in the circumferential direction by spaces (65); and
wherein the outer edge of each of said fixed and rotatable discs (6,7,8) carries a plurality of outwardly extending projections (11) that are separated by spaces (12).

8. The cylindrical lock of claim 7, wherein the projections (11) on discs (6,7,8) are regularly spaced around the perimeter of each disc and wherein at least one of the spaces between the projections includes a non cut-out portion (13), and optionally wherein the at least one non cut-out portion (13) on at least some of the discs are depressed relative to the remainder of the disc and further optionally the depression of the non cut-out portions (13) is deepest on the disc (6) furthest away from the cap (4), and the depth of the indentation decreases on each disc in the direction of the cap.

9. The cylindrical lock of any preceding claim, wherein the shaft (10,15) is formed in at least two parts connected together with splines and wherein at least one part of said shaft can be removed, rotated, and replaced in a different position on the splines relative to the other part of the shaft.

10. The cylindrical lock of any preceding claim, further comprising an indexing mechanism (20) that selectively retains the shaft (10,15) and/or discs (15,16) in a number of discrete rotated positions.

11. The cylindrical lock of any preceding claim, wherein the lock body (3) can be locked into the collar (2) in at least two positions in which the cap (4) extends axially beyond the collar by different distances.

12. The cylindrical lock of any preceding claim, which includes compliant material, e.g. a compliant band (53), that are arranged in the spaces (12) of the discs and that are configured to engage the projections (5) of the sleeve.

13. The cylindrical lock of any preceding claim, wherein the openings in the perimeter of at least one disc are scallop-shaped and/or extend in a direction away from the cap (4) and the extensions lie radially inwardly of collar projections (5).

14. An integrated pump housed in the bore of a hollow crank axle of a bicycle, the inner surface of the axle bore forming the cylinder of the pump, which pump comprises a piston movable in the bore to compress air within the bore and supply it to a tyre, which pump optionally comprises:
• a removable end cap (41) for closing the crank axle bore when the pump is not in use, which cap is optionally a cylindrical lock as in any preceding claim;
• a rod (40) carrying the removable end cap at a first end, and a piston (42) at a second end;
• a seal (43) having an opening to allow the rod to move through the seal; and
• a conduit connected to the seal to transfer to a bicycle tyre the pressurised air generated between the piston and the seal by reciprocal movement of the piston within the axle bore, said conduit comprising a connector to coupling the conduit to a valve on the bicycle tyre.

15. A fastener that comprises a shank (48), a head (49,50) and a lock as claimed in any of claims 1 to 13 connecting the head and the shank such that the head is rotatable on the shank while the lock is in its locked state and the head can be moved axially with respect to the shank when the lock is in its unlocked state, allowing the shank to be turned to tighten or loosen the fastener, e.g. the shank and the head can be rotationally connected after said axial movement of the head to allow the shank to be turned or the head can be removed from the shank by said axial movement to allow access to one end of the shank so that it can be turned.
